# FASCICULE DE BREVET EUROPEEN

(11) **EP 2 931 760 B1**
(45) Date de publication et mention de la délivrance du brevet: **28.09.2016**
(21) Numéro de dépôt: 13818301.7
(22) Date de dépôt: 13.12.2013
(51) Int. Cl.: C08F 8/14, C08F 10/14, C08G 71/04

(54) **POLYMÈRES HYDROCARBONÉS COMPORTANT DEUX GROUPEMENTS TERMINAUX À TERMINAISONS 2-OXO-1,3-DIOXOLAN-4-YL, LEUR PRÉPARATION ET LEUR UTILISATION**
POLYMERE AUF KOHLENWASSERSTOFFBASIS MIT ZWEI ENDGRUPPEN MIT 2-OXO-1,3-DIOXOLAN-4-YL-ENDUNGEN, HERSTELLUNG DAVON UND VERWENDUNG DAVON
HYDROCARBON-BASED POLYMERS COMPRISING TWO END GROUPS WITH 2-OXO-1,3-DIOXOLAN-4-YL ENDINGS, PREPARATION THEREOF AND USE THEREOF

(30) Priorité: 14.12.2012 FR 1262051
(43) Date de publication de la demande: 21.10.2015
(73) Titulaire: BOSTIK SA, 93210 La Plaine Saint Denis (FR)
(72) Inventeur: MICHAUD, Guillaume, 60200 Compiegne (FR); SIMON, Frédéric, F-60400 Pont L'Eveque (FR); FOUQUAY, Stéphane, F-76130 Mont Saint-Aignan (FR); ANNUNZIATA, Liana, I-84127 Salerno (SA) (IT); GUILLAUME, Sophie, F-35500 Vitre (FR); CARPENTIER, Jean-François, F-35690 Acigne (FR)
(74) Mandataire: Tran, Eugénie
(86) Numéro de dépôt international: PCT/FR2013/053075
(87) Numéro de publication internationale: WO 2014/091173

(56) Documents cités:
- WO-A1-2012/007254
- US-A- 5 728 917

## Description

La présente invention a pour objet un procédé de préparation d'au moins un polymère hydrocarboné comprenant deux extrémités chacune à terminaison 2-oxo-1,3-dioxolan-4-yl (ou cyclocarbonate) reliée à la chaîne principale du polymère par une liaison alkylène, et éventuellement un groupement divalent carboxyle ou oxy, soit deux groupements terminaux

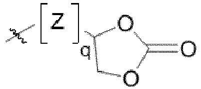

Où le groupe Z est constitué par au moins un groupe alkylène éventuellement relié directement à un groupe divalent carboxyle ou oxy, le groupe Z comportant de 1 à 19 atomes de carbone et q étant un nombre entier égal à 0 ou 1.

L'invention concerne aussi les polymères hydrocarbonés susceptibles d'être ainsi obtenus, ainsi que l'utilisation de ces polymères hydrocarbonés pour la préparation de polyuréthanes, sans isocyanate, par réaction avec au moins un composé comprenant au moins un groupe amine. Ces polyuréthanes, une fois formulés, sont destinés à être utilisés dans des revêtements, mastics ou adhésifs, en tant qu'additifs et/ou en tant que résines.

La synthèse de polyuréthanes se fait traditionnellement par réaction entre un diol et un diisocyanate. Les diisocyanates sont des composés toxiques en tant que tels, et sont généralement obtenus à partir de phosgène, lui-même très toxique par inhalation ou par contact. Le procédé de fabrication utilisé dans l'industrie met généralement en oeuvre la réaction d'une amine avec un excès de phosgène pour former un isocyanate.

La recherche d'alternatives à la synthèse de polyuréthanes sans utiliser d'isocyanate (ou NIPU pour « *Non Isocyanate PolyUrethane* » en anglais, i.e. polyuréthane sans isocyanate), représente donc un enjeu majeur.

Cette recherche a fait l'objet de nombreuses études. Les pistes les plus étudiées concernent l'utilisation de polymères susceptibles de réagir avec des amines ou oligomères d'amines pour former des polyuréthanes.

Ainsi, la demande de brevet US 2007/0151666, de Henkel Corp., décrit un système d'agent de collage qui comprend au moins deux composants A et B, où A est un composant polymérique comprenant au moins deux terminaisons 2-oxo-1,3-dioxolan-4-yl, et où B est un composant comprenant au moins deux groupes amines primaires et/ou secondaires. Un tel système d'agent de collage est utilisé comme adhésif à deux composants (ou bicomposant), c'est-à-dire que les deux composants sont mélangés au moment du collage. L'invention décrit principalement des composants A qui sont des polymères comprenant en chacune de leurs extrémités une terminaison (2-oxo-1,3-dioxolan-4-yl) liée à une chaîne polymérique par une fonction ester ou uréthane (carbamate) substituée en α de la 1,3-dioxolan-2-one, soit un groupement terminal (2-oxo-1,3-dioxolan-4-yl)méthyl carbamate ou (2-oxo-1,3-dioxolan-4-yl)méthyl oxycarbonyle. Il n'est pas envisagé que le polymère portant ces groupements terminaux du composant A puisse être un polymère hydrocarboné, saturé ou insaturé (comme une polyoléfine).

La demande de brevet US 2010/0312012, de Evonik-Degussa, décrit des polymères hydrocarbonés insaturés, comprenant au moins deux doubles liaisons carbone-carbone, formées par métathèse à partir d'hydrocarbures cycliques et d'acide acrylique en présence de catalyseur à base de ruthénium. Ces hydrocarbures cycliques sont par exemple le 1,5-cyclooctédiène, le cyclododécène, le 1,5,9-cyclododécatriène, le cycloheptène, le cyclohexène ou le cyclopentène. Les composés insaturés ainsi obtenus ont deux terminaisons acide carboxylique -CO₂H. De tels polymères hydrocarbonés insaturés α,ω-dicarboxyliques sont essentiellement destinés à la synthèse de polyesters et de polyamides.

La présente invention a pour but de fournir de nouveaux polymères permettant la synthèse de polyuréthanes sans utiliser d'isocyanate. L'invention représente ainsi une solution alternative à la synthèse de polyuréthanes sans utiliser d'isocyanate.

Ainsi, la présente invention concerne un procédé de préparation d'au moins un polymère hydrocarboné comportant deux groupements terminaux à terminaisons 2-oxo-1,3-dioxolan-4-yl, ledit procédé comprenant au moins une étape de polymérisation par ouverture de cycle par métathèse en présence :
- d'au moins un catalyseur de métathèse, de préférence un catalyseur comprenant du ruthénium, de façon encore plus préférée un catalyseur de Grubbs ;
- d'au moins un composé agent de transfert de chaîne (CTA) de formule (15) : 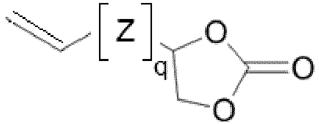 le groupe Z étant constitué par au moins un groupe alkylène éventuellement relié à un groupe divalent carboxyle ou oxy, le groupe Z comportant de 1 à 19 atomes de carbone et q étant un nombre entier égal à 0 ou 1 ; et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant de formule (7) : 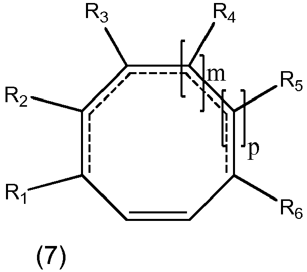
dans laquelle :
- chaque liaison carbone - carbone de la chaîne notée 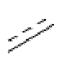 est une double liaison ou une simple liaison, en accord avec les règles de valence de la chimie organique ;
- Les groupes R1 et R6 sont soit tous les deux l'hydrogène soit chacun différent de l'hydrogène et liés entre eux en tant que membres d'un même cycle ou hétérocycle saturé ou insaturé (i.e. comportant au moins une double liaison carbone - carbone, en incluant les aromatiques) ;
- Les groupes R2, R3, R4 et R5, sont chacun, indépendamment ou non des autres groupes, un hydrogène, un groupe halogéno, un groupe alcoxycarbonyle ou un groupe alkyle, les groupes R2 à R5 pouvant être liés entre eux en tant que membres d'un même cycle ou hétérocycle saturé ou insaturé ;
- m et p sont des nombres entiers compris chacun dans une fourchette allant de 0 à 5, la somme m + p étant elle-même comprise dans une fourchette de 0 à 6 ;
ladite étape étant mise en oeuvre pendant une durée strictement supérieure à 3h lorsque le composé de formule (15) est le 4-vinyl-1,3-dioxolan-2-one, et pendant une durée supérieure ou égale à 2h dans tous les autres cas.

Lorsque m = 0, cela veut dire qu'il n'y a pas de groupe entre les crochets auxquels m s'applique et que les deux liaisons carbone - carbone chevauchant chacune un des crochets ne constituent qu'une seule et même liaison carbone - carbone. Cela vaut de même pour p = 0 ou q = 0.

Le rapport molaire du composé comprenant au moins un cycle hydrocarboné sur CTA est généralement compris dans une fourchette de 1 à 10000 et de préférence 1 à 100.

De façon générale, le composé de formule (7) est tel que la chaîne du cycle est de préférence constituée d'atomes de carbone, mais au moins un atome de carbone peut être remplacé par un autre atome tel que l'oxygène.

Les composés de formule (7) sont substitués ou non. Par substitution, on entend selon l'invention la présence d'un groupement, généralement remplaçant un hydrogène, la substitution étant de type alkyle, cyclique ou acyclique, alcoxycarbonyle ou halogéno, et la substitution étant de préférence située en position bêta, gamma ou delta de la double liaison carbone - carbone, de façon encore plus préférée en position gamma ou delta de la double liaison carbone - carbone. Ainsi, les dérivés substitués des composés de formule (7) comprennent les composés de formule (7) comprenant au moins un deuxième cycle comportant au moins une liaison carbone-carbone en commun avec le premier cycle.

Dans un mode de réalisation préféré de l'invention, ces composés ne sont pas substitués, c'est-à-dire que R1 = R2 = R3 = R4 = R5 = R6 = H.

Dans un mode de réalisation préféré de l'invention, indépendant ou non du mode de réalisation précédent, m = p = 1.

La polymérisation par ouverture de cycle par métathèse (ou ROMP pour *« Ring Opening Methathesis Polymerization* ») est une réaction bien connue de l'homme du métier, qui est ici mise en oeuvre en présence de composé de formule (15).

Le groupe Z est constitué de préférence soit par un seul groupe alkylène éventuellement relié(s) à un groupe divalent carboxyle ou oxy, soit par deux groupes alkylène, éventuellement reliés à un groupe divalent oxy ou carboxy. Dans ce dernier cas, un seul groupe oxy ou carboxy est généralement présent, le plus souvent entre les deux groupes alkylènes. Dans le cas où un seul groupe alkylène est relié à un groupe divalent carboxyle ou oxy, ce groupe carboxyle ou oxy est situé de préférence en extrémité du groupe Z.

Le composé de formule (15) est de façon préférée choisi parmi les composés énumérés ci-après :
- le 4-vinyl-1,3-dioxolan-2-one (ou 4-éthényl-1,3-dioxolan-2-one ou vinyl éthylène carbonate) (si q = 0) de formule : 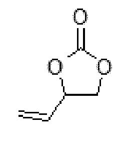
- le 4-(vinyloxyméthyl)-1,3-dioxolan-2-one (si q = 1 et Z est -O-CH2-) de formule : 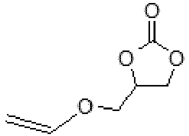
- le 4-(acryloyloxyméthyl)-1,3-dioxolan-2-one (ou 2-oxo-1,3-dioxolan-4-yl)méthyl propènoate) (si q = 1 et Z est -COO-CH₂-) de formule : 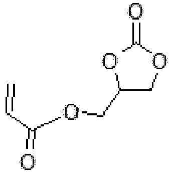
- les 4-(alcènyloxyméthyl)-1,3-dioxolan-2-one (si q = 1 et Z est -(CH₂)ₙ-O-CH₂- avec n nombre entier de 1 à 9) de formule : 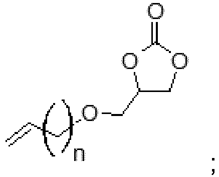
- les 4-(alcènoyloxyméthyl)-1,3-dioxolan-2-one (si q = 1 et Z est -(CH₂)_{n'}-COO-CH₂₋ avec n' nombre entier de 1 à 8) de formule :

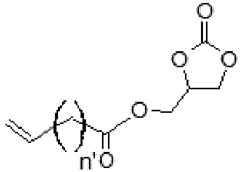

De façon particulièrement préférée, le composé de formule (15) est le 4-(acryloyloxyméthyl)-1,3-dioxolan-2-one de formule : 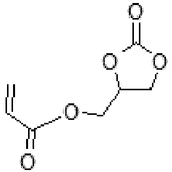 ou le 4-vinyl-1,3-dioxolan-2-one de formule :

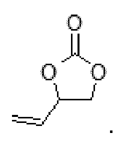

Les composés cycliques de formule (7) sont de préférence selon l'invention choisis dans le groupe formé par le cycloheptène, le cyclooctène, le cyclononène, le cyclodécène, le cycloundécène, le cyclododécène, le 1,5-cyclooctadiène, le cyclononadiène, le 1,5,9-cyclodécatriène, ainsi que les norbornène, norbornadiène, dicyclopentadiène, 7-oxanorbornène et 7-oxanorbornadiène respectivement de formules :

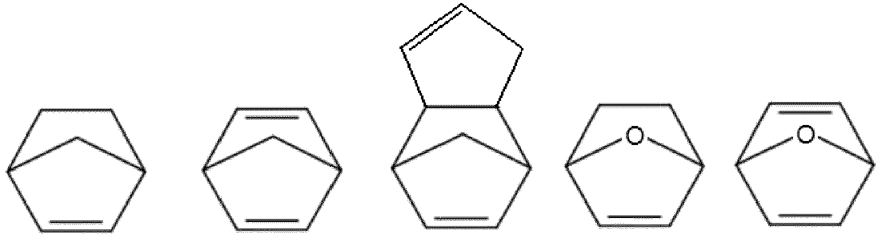

Le cyclooctène (COE), le norbornène et le dicyclopentadiène (DCPD) sont tout particulièrement préférés.

On peut aussi citer les dérivés mono- ou poly-substitués de ces composés cycliques, tels que, de préférence, les alkyl-cyclooctènes, les alkyl-cyclooctadiènes, les halocycloalcènes et les alkylcarbonylcycloalcènes. Dans un tel cas, les groupes alkyle, halogéno et alcoxycarbonyle ont les significations données plus haut. Les groupes alkyles sont le plus souvent en position bêta, gamma ou delta de la double liaison carbone - carbone, de façon encore plus préférée en position gamma ou delta de la double liaison carbone - carbone.

La polymérisation par ouverture de cycle par métathèse est mise en oeuvre le plus souvent en présence d'au moins un solvant, généralement choisi dans le groupe formé par les solvants aqueux, organiques ou polaires typiquement utilisés dans les réactions de polymérisation et qui sont inertes dans les conditions de la polymérisation, tels que les hydrocarbures aromatiques, les hydrocarbures chlorés, les éthers, les hydrocarbures aliphatiques, l'eau ou leurs mélanges. Un solvant préféré est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'eau et leurs mélanges. De façon encore plus préférée, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane et leurs mélanges. De façon encore plus particulièrement préférée, le solvant est le tétrahydrofurane, le toluène ou un mélange de toluène et de chlorure de méthylène. La solubilité du polymère formé au cours de la réaction de polymérisation dépend généralement et principalement du choix du solvant et du poids molaire du polymère obtenu. Il est aussi possible que la réaction soit mise en oeuvre sans solvant.

Le catalyseur de métathèse, tel que par exemple un catalyseur de Grubbs, est généralement un produit du commerce.

Le catalyseur de métathèse est le plus souvent un catalyseur de métal de transition dont notamment un catalyseur comprenant du ruthénium le plus souvent sous forme de complexe(s) du ruthénium tel que du ruthénium carbène. On peut ainsi utiliser de façon particulièrement préférée les catalyseurs de Grubbs. Par catalyseur de Grubbs, on entend généralement selon l'invention un catalyseur de Grubbs 1^{ère} et 2^{ème} génération, mais aussi tout autre catalyseur de type Grubbs (comprenant du ruthénium - carbène) accessible à l'homme du métier, tels que par exemple les catalyseurs de Grubbs substitués décrits dans le brevet US 5849851.

Un catalyseur de Grubbs 1^{ère} génération est généralement de formule (8) : 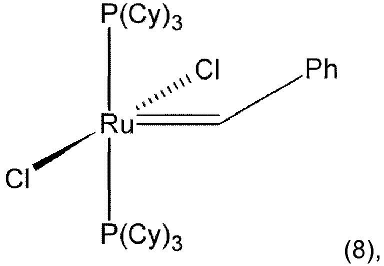 où Ph est le phényl et Cy est le cyclohexyle.

Le groupe P(Cy)₃ et un groupe tricyclohexyl phosphine.

La dénomination IUPAC de ce composé est : benzylidène-bis(tricyclohexylphosphine) dichlororuthénium (de numéro CAS 172222-30-9).

Un catalyseur de Grubbs 2^{ème} génération est généralement de formule (9) : 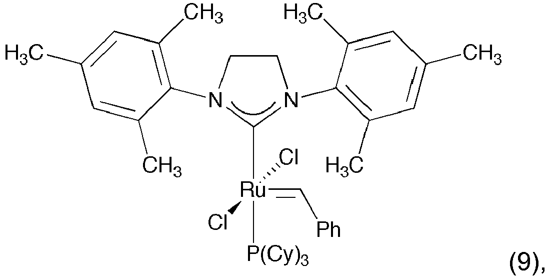 où Ph est le phényl et Cy est le cyclohexyle.

La dénomination IUPAC de la deuxième génération de ce catalyseur est benzylidène [1,3- bis(2,4,6-triméthylphényl)-2- imidazolidinylidène] dichloro(tricyclohexylphosphine) ruthénium (de numéro CAS 246047-72-3).

La présente invention concerne aussi tout polymère hydrocarboné comprenant deux groupements terminaux à terminaisons 2-oxo-1,3-dioxolan-4-yl susceptible d'être obtenu par le procédé selon l'invention.

De préférence, ce polymère a deux groupements terminaux, chacun ayant pour formule : 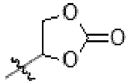 (où q = 0) ; ou bien de formule : 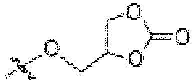 (où q = 1 et Z est un méthylène relié à un groupement oxy) ; ou bien de formule : 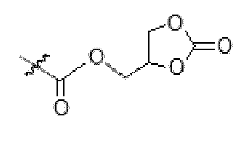 (où q = 1 et Z est un méthylène relié à un groupement carboxyle) ; ou bien de formule : 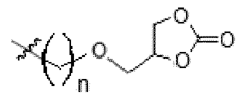 (où q = 1 et Z est un alkylène à n atomes de carbone relié à un méthylène par l'intermédiaire d'un groupement oxy) ; ou bien de formule : 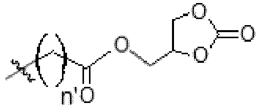 (où q = 1 et Z est un alkylène à n' atomes de carbone relié à un méthylène par l'intermédiaire d'un groupement carboxyle).

De façon particulièrement préférée, ce polymère a deux groupements terminaux, chacun ayant pour formule :

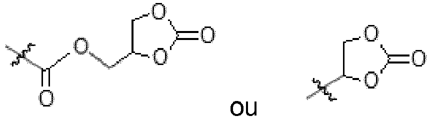

L'invention concerne encore un (autre) procédé de préparation d'au moins un polymère hydrocarboné selon l'invention dans le cas où y = 0, où q = 1 et où Z est -CH2-COO-, ledit procédé comprenant au moins une étape d'estérification d'un polymère hydrocarboné insaturé ayant deux terminaisons acides carboxyliques, par le 4-(hydroxyméthyl)-1,3-dioxolan-2-one (ou carbonate de glycérol). Ces composés précurseurs insaturés dicarboxyliques et leurs synthèse sont par exemple tels que décrits dans la demande de brevet US 2010/0312012.

Le procédé de préparation selon l'invention, qu'il comprenne au moins une étape de polymérisation par ouverture de cycle par métathèse ou au moins une étape d'estérification, peut comporter en outre au moins une étape supplémentaire d'hydrogénation de doubles liaisons carbone-carbone. Bien évidemment, cette étape n'est mise en oeuvre que sur un polymère hydrocarboné insaturé. Il est ainsi procédé à l'hydrogénation d'au moins une double liaison carbone-carbone, de préférence à l'hydrogénation totale des doubles liaisons carbone-carbone.

Cette étape est généralement mise en oeuvre par hydrogénation catalytique, le plus souvent sous pression d'hydrogène et en présence d'un catalyseur d'hydrogénation tel qu'un catalyseur Pd/C.

L'invention concerne encore un polymère hydrocarboné comprenant deux groupements terminaux à terminaisons 2-oxo-1,3-dioxolan-4-yl, ledit polymère hydrocarboné étant susceptible d'être obtenu selon le procédé de l'invention, ledit polymère hydrocarboné étant de formule (1): 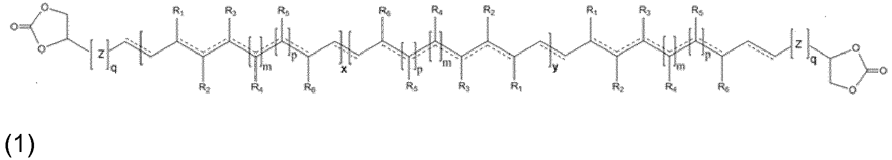 dans laquelle :
- Chaque liaison carbone - carbone de la chaîne notée 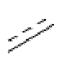 est une double liaison ou une simple liaison, en accord avec les règles de valence de la chimie organique ;
- Les groupes R1 et R6 sont soit tous les deux l'hydrogène soit chacun différent de l'hydrogène et liés entre eux en tant que membres d'un même cycle ou hétérocycle saturé ou insaturé (i.e. comportant au moins une double liaison carbone - carbone, en incluant les aromatiques) ;
- Les groupes R2, R3, R4 et R5, sont chacun, indépendamment ou non des autres groupes, un hydrogène, un groupe halogéno, un groupe alcoxycarbonyle ou un groupe alkyle, les groupes R2 à R5 pouvant être liés entre eux en tant que membres d'un même cycle ou hétérocycle saturé ou insaturé ;
- Le groupe Z est constitué par au moins un groupe alkylène éventuellement relié à un groupe divalent carboxyle ou oxy, le groupe Z comportant de 1 à 19 atomes de carbone;
- q est un nombre égal à 0 ou 1 ;
- m et p sont des nombres entiers compris chacun dans une fourchette allant de 0 à 5, la somme m + p étant elle-même comprise dans une fourchette de 0 à 6 ; et
- x et y sont chacun un nombre entier, indépendamment l'un de l'autre, la somme x + y étant telle que la masse molaire moyenne en nombre Mn du polymère hydrocarboné de formule (1) est comprise dans une fourchette de 600 à 20000 g/mol, et la polymolécularité (PDI) du polymère hydrocarboné de formule (1) est comprise dans une fourchette de 1,1 à 3,0 et de préférence de 1,4 à 2,5.

Le polymère susceptible d'être obtenu par le procédé selon l'invention est de préférence un polymère de formule (1).

En outre, on parle ici de polymère mais il s'agit plus précisément d'un mélange de polymères représentés par la formule (1), comme il est bien connu de l'homme du métier. A cet égard les masses molaires sont des masses molaires « moyennes ».

Le polymère de formule (1) peut donc s'écrire schématiquement TAxByAT, ou A est l'unité monomère présente x fois, B est l'unité monomère présente y fois et T est le groupement terminal. Cependant, l'écriture de la formule (1) est bien évidemment pour l'homme du métier une écriture simplifiée. Le copolymère Ax-1 By est un copolymère à structure homogène aléatoire (i.e. constitué de macromolécules dans lesquelles la probabilité de trouver une unité monomère donnée A ou B en un point donné de la chaîne est indépendante de la nature des unités monomères adjacentes) ou périodique (i.e. constitué de macromolécules comprenant deux unités monomères dans un ordre séquentiel régulier, par exemple alterné) ou statistique (i.e. constitué de macromolécules dans lesquelles la distribution des unités monomères obéit à des lois statistiques connues). Dans un tel polymère, seule l'unité monomère A est bien présente aux deux extrémités du polymère, seule à une extrémité ou en liaison avec T à l'autre extrémité. Sans vouloir être limités à une théorie, les inventeurs pensent qu'il est hautement probable que le copolymère Ax-1 By est un copolymère à structure homogène aléatoire. Les unités monomères sont A et B sont donc réparties aléatoirement le long de la chaîne principale du polymère.

Cette simplification d'écriture vaut bien entendu pour toutes les formules de polymères qui seront décrites ci-après, y compris celles des exemples.

Lorsque y = 0, cela veut dire qu'il n'y a pas de groupe entre les crochets auxquels y s'applique et que les deux liaisons carbone - carbone chevauchant chacune un des crochets ne constituent qu'une seule et même liaison carbone - carbone. Bien évidemment toutes les formules données ici sont en accord avec les règles de valence de la chimie organique.

Au sens de la description le groupe Z est symétrique par rapport à la chaîne principale du polymère. On entend donc signifier que, si par exemple Z est lié au cyclocarbonate par une liaison (par exemple -CH2-COO-, CH2 étant lié au groupe cyclocarbonate) dans un groupement terminal, q étant égal à 1, le groupe Z est lié au groupe cyclocarbonate par la même liaison dans l'autre groupement terminal (i.e. le CH2 de -CH2-COO- sera aussi lié au cyclocarbonate). C'est ce qui sera illustré ci-après pour le polymère de formule (101).

Bien évidemment toutes les formules données ici sont en accord avec les règles de valence de la chimie organique.

Dans le cas particulier où y =0, où q = 1 et où Z est -CH2-COO-, la formule (1) devient la formule suivante : 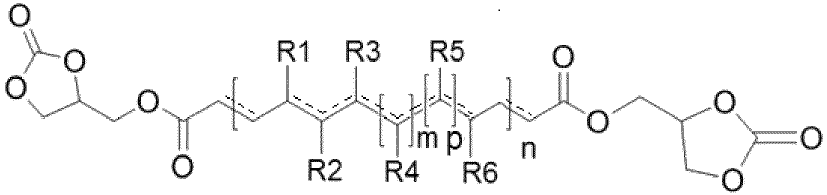 (101), avec n = x + 1. Dans ce cas, les deux groupements terminaux sont (2-oxo-1,3-dioxolan-4-yl)méthyl oxycarbonyle.

Par groupe alkyle, on entend selon l'invention un composé hydrocarboné linéaire ou ramifié, cyclique, acyclique, ou polycyclique, et comprenant généralement de un à vingt-deux atomes de carbone. Un tel groupe alkyle comprend généralement de 1 à 4, de préférence de 1 à 2, atomes de carbone.

Par groupe halogéno, on entend selon l'invention un groupe iodo, chloro, bromo ou fluoro, de préférence chloro.

Par hétérocycle, on entend selon l'invention un cycle pouvant comprendre un autre atome que le carbone dans la chaîne du cycle, tel que par exemple l'oxygène.

Par groupe alcoxycarbonyle, on entend selon l'invention un groupe divalent alkylène, linéaire ou ramifié, saturé ou partiellement insaturé, comprenant de un à vingt-deux, de préférence de un à huit, de façon encore plus préférée de un à six, atomes de carbone, et tel qu'une chaîne d'atomes de carbone qu'il comprend comporte en outre un groupe divalent -COO-.

La polymolécularité PDI (ou dispersité *Ð*_{M}) est définie comme le rapport Mw / Mn, c'est-à-dire le rapport de la masse molaire moyenne en poids à la masse molaire moyenne en nombre du polymère.

Les deux masses molaires moyennes Mn et Mw sont mesurées selon l'invention par chromatographie d'exclusion stérique (ou SEC, acronyme de *« Size Exclusion Chromatography* » en anglais), usuellement avec étalonnage PEG (PolyEthylèneGlycol) ou PS (PolyStyrène).

Par groupement terminal, on entend un groupement situé en bout de chaîne (ou extrémité) du polymère.

S'il est insaturé, le polymère selon l'invention comprend le plus souvent une pluralité de (i.e. plus de deux) doubles liaisons carbone-carbone.

Dans un mode de réalisation préféré, le polymère de formule (1) ne comprend qu'une seule double liaison carbone - carbone par unité de répétition [...], et le polymère est de formule (1') :

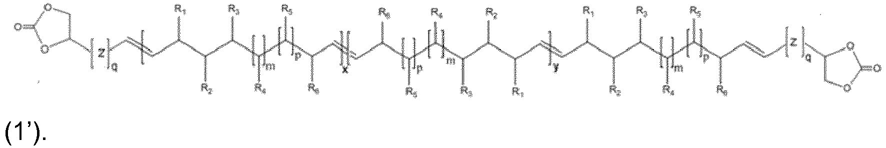

Dans ce cas, de façon préférée, m est égal à 1 et p est égal à 1.

De préférence, l'invention concerne un polymère hydrocarboné comprenant deux groupements terminaux à terminaisons 2-oxo-1,3-dioxolan-4-yl, ledit polymère hydrocarboné étant de formule (2) ou de formule (3) : 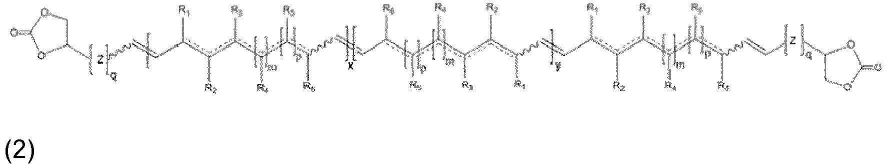 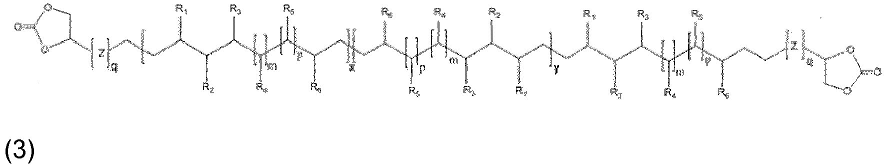 dans lesquelles 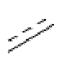 , m, p, q, Z, x, y, R1, R2, R3, R4, R5 et R6 ont les significations données plus avant et, comme il est connu de l'homme du métier, la liaison 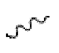 signifie que la liaison est orientée géométriquement d'un côté ou de l'autre par rapport à la double liaison, soit Z (pour Zusammen = cis) ou E (pour Entgegen = trans).

De façon particulièrement préférée, m est égal à 1 et p est égal à 1.

Dans le cas particulier où y = 0, où q = 1 et où Z est -CH2-COO-, les formules (2) et (3) deviennent respectivement les formules suivantes : 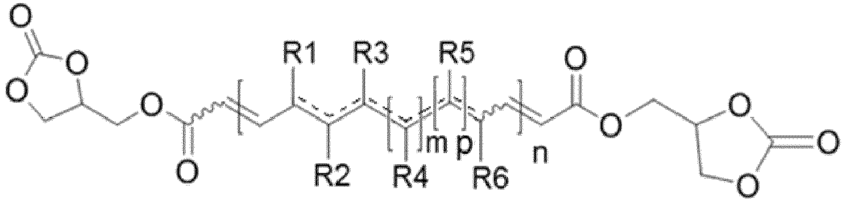 (102) avec n = x + 1 ; et 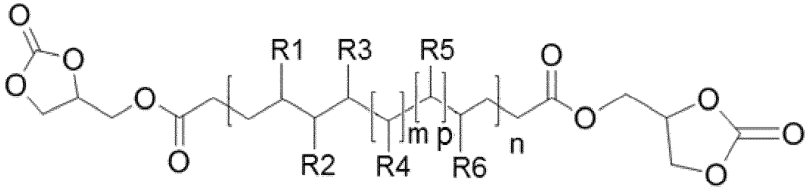 (103) avec n = x + 1.

Le polymère de formule (2) est généralement d'orientation trans (E) - trans (E), trans (E) - cis (Z) ou cis (Z) - cis (Z). Les trois isomères sont généralement présents en proportions variables, avec le plus souvent une majorité de trans (E) - trans (E). Il est possible selon l'invention que soit présent de façon quasi majoritaire l'isomère trans (E) - trans (E).

La formule (2) illustre le cas où les unités de répétition de la chaîne principale du polymère de formule (1) sont insaturées et comportent chacune au moins une double liaison carbone - carbone. Dans un mode de réalisation préféré, le polymère de formule (2) ne comprend qu'une seule double liaison carbone - carbone par unité de répétition, et le polymère est de formule (2') :

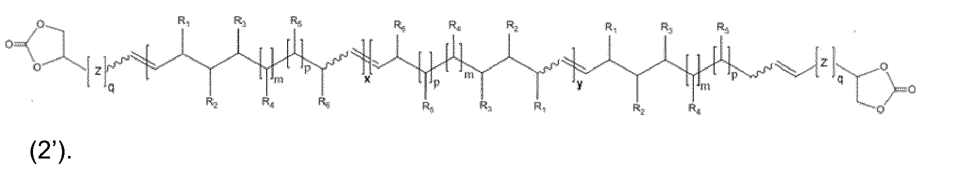

La formule (3) illustre le cas où la chaîne principale du polymère de formule (1) est saturée.

Le polymère de formule (3) peut par exemple être issu de l'hydrogénation du polymère de formule (2).

Selon un mode de réalisation préféré de l'invention, l'invention concerne un polymère hydrocarboné comprenant deux groupements terminaux à terminaisons 2-oxo-1,3-dioxolan-4-yl, ledit polymère hydrocarboné étant de formule (4) : 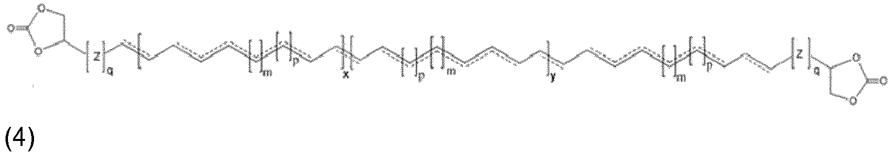 - dans laquelle 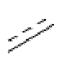 , m, p, q, Z, x et y ont les significations données plus avant.

Dans le cas particulier où y = 0, où q = 1 et où Z est -CH2-COO-, la formule (4) devient la formule suivante : 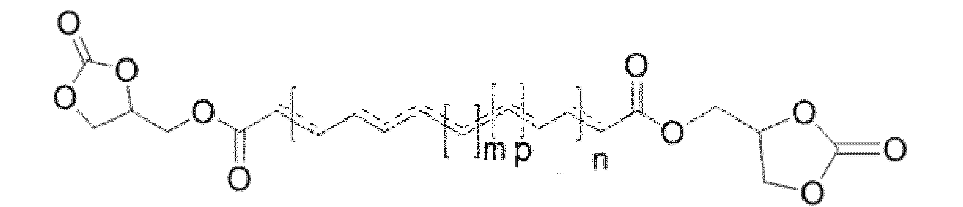 (104) avec n = x + 1.

La formule (4) correspond à la formule (1) dans laquelle R1, R2, R3, R4, R5 et R6 sont chacun un hydrogène (H). Dans un mode de réalisation préféré, le polymère de formule (4) ne comprend au plus qu'une seule double liaison carbone - carbone par unité de répétition, et le polymère est de formule (4').

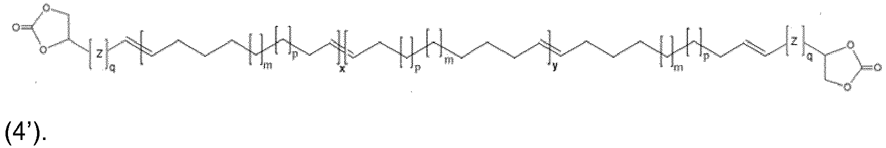

Selon ce mode de réalisation, de préférence, l'invention concerne un polymère hydrocarboné comprenant deux groupements terminaux à terminaisons 2-oxo-1,3-dioxolan-4-yl, ledit polymère hydrocarboné étant de formule (5) ou de formule (6) : 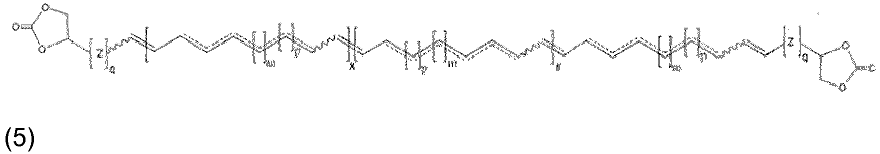 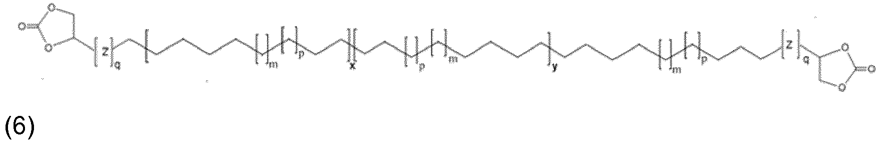 dans lesquelles 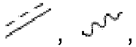 m, p, q, Z, x et y ont les significations données plus avant.

Dans le cas particulier où y = 0, où q = 1 et où Z est -CH2-COO-, les formules (5) et (6) deviennent respectivement les formules suivantes : 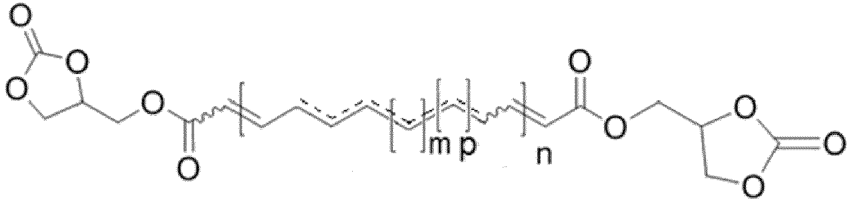 (105) avec n = x + 1 ; et 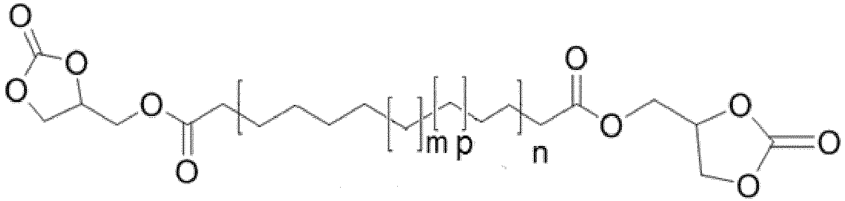 (106) avec n = x + 1.

La formule (5) illustre le cas où l'unité de répétition de la chaîne principale du polymère de formule (4) est insaturée et comporte au moins une double liaison carbone - carbone.

Dans un mode de réalisation préféré, le polymère de formule (5) ne comprend qu'une seule double liaison carbone - carbone par unité de répétition, et le polymère est de formule (5'). Dans ce cas, de façon préférée, m est égal à 1 et p est égal à 1.

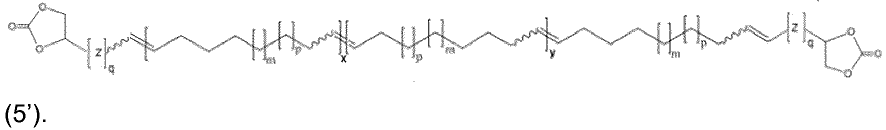

La formule (6) illustre le cas où la chaîne principale du polymère de formule (4) est saturée.

Le polymère de formule (6) peut par exemple être issu de l'hydrogénation du polymère de formule (5).

Les formules (5) et (6) correspondent aux formules (2) et (3) dans lesquelles R1, R2, R3, R4, R5 et R6 sont chacun un hydrogène (H).

L'invention concerne enfin un procédé de préparation de polyuréthanes comprenant la réaction d'au moins un polymère selon l'invention, i.e. susceptible d'être obtenu par le procédé de l'invention et éventuellement de formule (1), avec au moins un composé comprenant au moins un, de préférence au moins deux, groupements amines, par exemple choisi parmi les amines, les diamines, les triamines et les polyamines, ainsi que les polyuréthanes susceptibles d'être obtenus par ce procédé de préparation.

Les amines sont de préférence telles qu'au moins un groupement amine, de préférence tous les groupements amines, sont des groupements amines primaires.

Les polyuréthanes ainsi obtenus, qui sont nouveaux, sont avantageusement sans isocyanate.

Ces polyuréthanes, une fois formulés (i.e. mis en formulation avec d'autres additifs éventuels), sont destinés à être utilisés dans des revêtements, mastics ou adhésifs, en tant que charges et/ou en tant que résines. Il est aussi possible de formuler indépendamment le polymère de formule (I) et le composé comprenant au moins un groupement amine, avant leur mélange.

L'invention sera mieux comprise à la vue des exemples qui suivent.

### EXEMPLES

Les exemples qui suivent illustrent l'invention sans pour autant en limiter la portée.

Les réactions de synthèse des exemples 1 à 4 ont été menées en deux étapes : une première étape de synthèse de l'agent de transfert (exemple 1) et une seconde étape de polymérisation par ouverture de cycle ROMP du cyclooctène (COE) en présence d'un catalyseur de Grubbs et de l'agent de transfert ainsi synthétisé (exemple 2).

L'agent de transfert (CTA) pour les exemples 1 à 4 était le (2-oxo-1,3-dioxolan-4-yl)méthyl propènoate.

Un composé polymère de formule (10) suivante a ainsi été synthétisé à partir du CTA et du COE dans les exemples 1 à 4 : 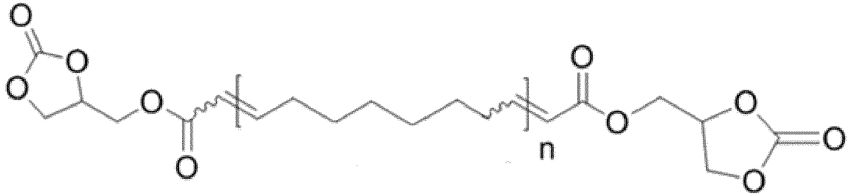 (10).

Ce composé (10) est un composé de formule (5') dans lequel n = x + 1, m est égal à 1, y est égal à 0, Z est -CH2-COO-, q est égal à 1 et p est égal à 1.

La réaction de synthèse de l'exemple 5 a été réalisée en une seule étape.

L'agent de transfert (CTA) pour l'exemple 5 était le 4-vinyl-1,3-dioxolan-2-one.

Un polymère a ainsi été synthétisé à partir du CTA et du COE dans l'exemple 5. C'était un composé de formule (5') dans lequel n = x + 1, m est égal à 1, y est égal à 0, q est égal à 0 et p est égal à 1.

### Protocole expérimental

Toutes les expériences ont été effectuées si nécessaire sous atmosphère d'argon.

Le 4-(hydroxyméthyl)-1,3-dioxolan-2-one (ou carbonate de glycérol) était un produit de la société ABCR Chemical. Tous les autres réactifs (catalyseur de Grubbs 2ème génération de formule (9) et le chlorure d'acryloyle (ou chlorure d'acide acrylique ou chlorure d'acide propénoïque), étaient des produits de la société Aldrich. Le 4-vinyl-1,3-dioxolan-2-one était aussi un produit de la société Aldrich.

Le cyclooctène (COE) était un produit de la société Aldrich, qui a été distillé sur CaH₂ et dégazé avant utilisation.

Le tétrahydrofurane (THF) a été soumis au reflux sous Na/benzophénone, distillé et dégazé avant utilisation. Tous les autres solvants ont été utilisés tels que reçus.

Les spectres FTIR (Infrarouge à Transformée de Fourier) ont été enregistrés sur un appareil Shimadzu IRAffinity-1.

Les spectres RMN ont été enregistrés sous spectromètres AM-500 Bruker et AM-400 Bruker, à 298 K dans CDCl₃. Les déplacements chimiques étaient référencés par rapport au tétramethylsilane (TMS) en utilisant la résonance (¹H) ou (¹³C) des solvants deutérés. Les masses molaires moyennes en nombre et en poids (Mₙ and M_{w}) et la polydispersité PDI (M_{w}/Mₙ) des polymères étaient déterminés par chromatographie de perméation de gel (GPC) en utilisant un instrument Polymer Laboratories PL-GPC 50. Des spectres de masse ont été enregistrés avec un spectromètre (Brucker) AutoFlex LT à haute résolution équipé d'une source laser pulsée N2 (337 nm, 4 ns de largeur de pulse).

### Exemple 1 : Synthèse du (2-oxo-1,3-dioxolan-4-yl)méthyl propènoate (agent de transfert de chaîne ou CTA)

La réaction a été mise en oeuvre selon le schéma 1 suivant :

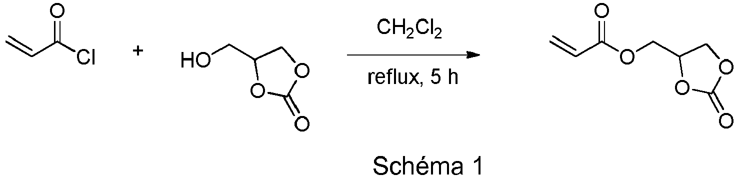

A une solution de 7g de carbonate de glycérol dans du dichlorométhane sec (15mL) ont été ajoutés, au goutte à goutte, 4,8 mL (5,7g) de chlorure d'acryloyle à température ambiante. La solution claire résultante a été lentement chauffée à 45°C et soumis à un reflux pendant 5 heures supplémentaires. A la fin de cette période, la solution a été refroidie à température ambiante et le solvant a été évacué par distillation. Le produit huileux brut ainsi obtenu a été purifié par distillation sous vide. Un produit clair et sans couleur a été obtenu (rendement 9,2g soit 90%). Les données de RMN de ce produit étaient les suivantes : RMN ¹H (CDCl₃, 298 K): δ= 4.3-4.6 (4H, m, C*H₂*-CH-C*H₂*OCOO), 4.9 (1 H, m, CH₂-C*H*-CH₂OCOO), 5.9 (1H, d, *J*_{HH} = 10,7 Hz, C*H*₂=CH), 6.1 (1 H, m, CH₂=C*H*), 6.4 (1H, d, *J*_{HH} = 17,2 Hz, C*H*₂=CH). RMN ¹³C{¹H} (CDCl₃, 298 K): δ= 63.2, 66.2 (CH₂-5CC), 74.0 (CH-5CC), 127.2 (CH₂=CH-), 132.5 (CH₂=CH-), 154.8 (O=COO), 165.5 (O=CO).

On a donc obtenu le (2-oxo-1,3-dioxolan-4-yl)méthyl propènoate (CTA) de formule (11).

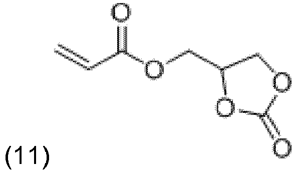

### Exemple 2 : Synthèse d'une polyoléfine insaturée comprenant deux groupements terminaux (2-oxo-1,3-dioxolan-4-yl)méthyl oxycarbonyle à partir du COE et du CTA synthétisé à l'exemple 1

La réaction a été mise en oeuvre selon le schéma 2 suivant :

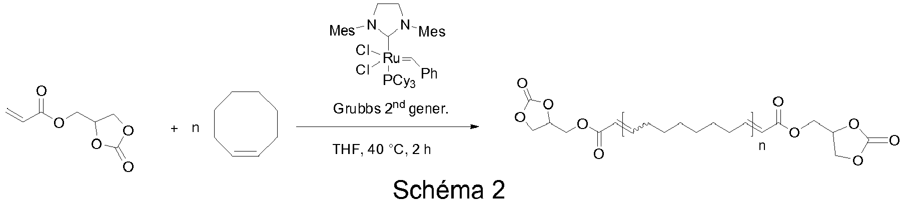

La polymérisation a usuellement été conduite selon les données ci-après. Une fiole de 100 mL était chargée sous agitation et de manière séquentielle avec du THF (tétrahydrofurane) (5 mL), du COE (1,4 mL) et la quantité appropriée d'agent de transfert (2-oxo-1,3-dioxolan-4-yl)méthyl 2-propènoate. La solution résultante a été thermostatée à 40°C et la polymérisation a été démarrée par injection d'une solution de pré-catalyseur, préparée en dissolvant un catalyseur de Grubbs 2^{ème} génération (« Ru ») (5,0 mg) dans du THF (3 mL). Après deux heures de réaction, le mélange a été versé dans du méthanol froid acidifié. Les polymères présents étaient récupérés par filtration et séchés à 25°C sous vide.

Le composé de formule (10) a ainsi été synthétisé.

Différents essais ont été conduits selon cette réaction. Ils sont résumés dans le tableau 1 ci-après.

**Tableau 1**

| **Essai** | **[CTA]/[Ru] (mol/mol)** | **[COE]/[CTA] (mol/mol)** | **Conv. (%)** | **Mn GPC (g/mol)** | **PDI** |
|---|---|---|---|---|---|
| **E1** | 30 | 66 | 100 | 47 800 | 1,60 |
| **E2** | 50 | 40 | 100 | 12 200 | 1,69 |
| **E3** | 80 | 80 | 100 | 7 900 | 1,48 |
| **E4** | 50 | 3 | 100 | 2200 | 1,51 |

Des analyses RMN du polymère obtenu à l'essai E2 ont donné les valeurs suivantes, qui confirment la formule structurelle (10) de ce polymère. RMN ¹H (CDCl₃, 500 MHz, 298 K) - unité de répétition *trans :* 1.30, 1.97, 5.39; unité de répétition *cis :* 1.30, 2.03, 5.34; groupement terminal : 2.25 (m, 2H, -C*H2-*CH=CH-COO), 4.30, 4.63 (m, 4H, -C*H2*-CH-C*H2*OCOO), 4.96 (m, 1 H, -CH2-CH-CH2OCOO), 5.87 (d, *Jₜᵣₐₙ* = 15.2 Hz, 1 H, -CH=C*H*-COO), 7.07 (m, 1H, - C*H*=CH-COO, *Jₜᵣₐₙₛ* = 15.0 Hz, *J* = 7.0 Hz). RMN ¹³C (CDCl₃, 125 MHz, 298 K) - unité de répétition : 130.34 *(trans),* 129.88 *(cis),* 32.63, 29.77, 29.69, 29.24, 29.20, 29.07, 27.26; groupement terminal : 62.80, 66.0 -CH2-CH-CH2OCOO), 73.87 (-CH2-CH-CH2OCOO), 119.50 (-CH=CH-COO-), 152.04 (-CH=CH-COO), 154.6 (O=COO), 165.9 (OC=O).

### Exemple 3: Synthèse d'une polyoléfine saturée comprenant deux groupements terminaux (2-oxo-1,3-dioxolan-4-yl)méthyl oxycarbonyle par hydrogénation catalytique d'une polyoléfine insaturée comprenant deux groupements terminaux (2-oxo-1,3-dioxolan-4-yl)méthyl oxycarbonyle de l'exemple 2

La réaction est conduite selon le schéma (3) suivant :

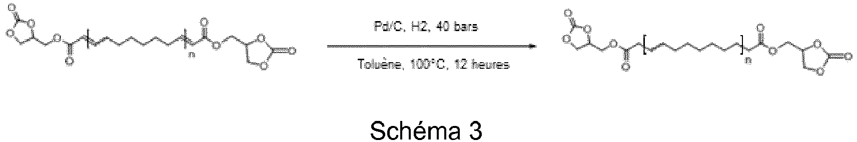

Dans un réacteur de 50 mL équipé d'un barreau magnétique ont été introduits 0,500g de polymère dans 20 mL de toluène puis 0,05 g de catalyseur Pd/C (10% en masse). Le réacteur a été porté à 40 bars (environ 4 MPa) sous pression d'hydrogène et 100°C pendant 12 heures. Le mélange a ensuite été refroidi à température ambiante et ventilé, puis la suspension a été versée dans du méthanol. Le polymère a été récupéré par extraction avec du toluène à chaud. La solution a ensuite été versée à nouveau dans du méthanol et le précipité sous forme de poudre blanche a été récupéré par filtration et séché sous vide à 40°C.

L'hydrogénation des doubles liaisons a été confirmée par RMN ¹H et ¹³C.

### Exemple 4 : Synthèse de polyuréthanes à partir d'une polyoléfine insaturée comprenant deux groupements terminaux (2-oxo-1,3-dioxolan-4-yl)méthyl oxycarbonyle de l'exemple 2

Il a été mis en réaction, séparément, à 80°C et dans un rapport stoechiométrique, un mélange d'une des polyoléfines comprenant deux groupements terminaux (2-oxo-1,3-dioxolan-4-yl)méthyl oxycarbonyle de l'exemple 2 et de diamine primaire de type polyéther diamine (JEFFAMINE EDR 176, Huntsman) et ce, jusqu'à disparition complète de la bande infrarouge caractéristique des groupements 1,3-dioxolan-2-one (à 1800 cm⁻¹) et apparition des bandes caractéristiques de la liaison carbamate (bande à 1700 cm⁻¹). La durée de la réaction était d'environ 72 heures.

Dans chaque cas, le produit ainsi synthétisé a conduit à la formation d'un polyuréthane, lequel mélange bicomposant formulé de façon adéquate a permis d'obtenir des propriétés adhésives.

### Exemple 5 : Synthèse d'une polyoléfine insaturée comportant deux groupements terminaux 2-oxo-1,3-dioxolan-4-yl à partir de cyclooctène et de l'agent de transfert de chaîne 4-vinyl-1,3-dioxolan-2-one

La réaction de synthèse a été menée par polymérisation par ouverture de cycle ROMP du cyclooctène (COE) en présence d'un catalyseur de Grubbs et de l'agent de transfert (CTA) 4-vinyl-1,3-dioxolan-2-one.

La réaction a été mise en oeuvre selon le schéma 4 suivant :

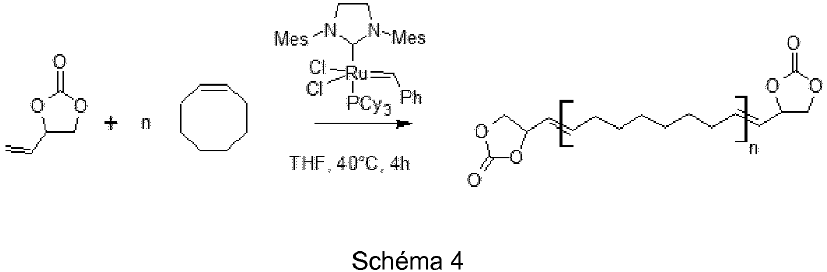

La polymérisation a usuellement été conduite selon les données ci-après. Une fiole de 100 mL était chargée sous agitation et de manière séquentielle avec du THF (tétrahydrofurane) (5 mL), du COE (1,4 mL) et la quantité appropriée d'agent de transfert 4-vinyl-1,3-dioxolan-2-one. La solution résultante a été thermostatée à 40°C et la polymérisation a été démarrée par injection d'une solution de pré-catalyseur, préparée en dissolvant un catalyseur de Grubbs 2ème génération (« Ru ») (5,0 mg) dans du THF (3 mL). Le ratio COE sur CTA était de 20. Après quatre heures de réaction, le mélange a été versé dans du méthanol froid acidifié. Les polymères présents étaient récupérés par filtration et séchés à 25°C sous vide.

Des analyses RMN du polymère obtenu à l'essai ont donné les valeurs suivantes, qui confirment la formule structurelle de ce polymère : RMN 1H (CDCl₃, 400 MHz, 298 K) δ Unité trans de la chaîne principale: 1.30, 1.97, 5.39; Unité cis de la chaîne principale : 1.30, 2.03, 5.34; bout de chaîne cyclocarbonate: 4.12, 4.56 (t, 2H, CH=CH CH-CH2OCOO ), 5.09 (m, 1H, - CH=CH-CH-CH2OCOO ), 5.53 (dt, 1 H, *Jₜᵣₐₙₛ =* 15.0 Hz, -CH=CH-CH-CH2OCOO) 5.97 (m, *Jₜᵣₐₙₛ* = 14.8 Hz, J = 7.0 Hz, 1 H, CH=CH-CH-CH2OCOO). RMN 13C{1H} (CDCl₃, 125 MHz, 298 K) δ Unité trans de la chaîne principale: 130.34 *(trans),* Unité cis de la chaîne principale:129.88 *(cis),* 32.63, 29.77, 29.69, 29.24, 29.20, 29.07, 27.26 bout de chaîne cyclocarbonate: 69,51, 78,24, 123,89, 140,02 (-CH=CH-CH-CH2OCOO) 155.10 (O=CO).

## Revendications

1. Procédé de préparation d'au moins un polymère hydrocarboné comportant deux groupements terminaux à terminaisons 2-oxo-1,3-dioxolan-4-yl, ledit procédé comprenant au moins une étape de polymérisation par ouverture de cycle par métathèse en présence :
- d'au moins un catalyseur de métathèse, de préférence un catalyseur comprenant du ruthénium, de façon encore plus préférée un catalyseur de Grubbs,
- d'au moins un composé agent de transfert de chaîne (CTA) de formule (15) : 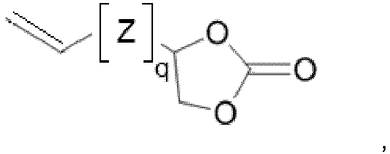 le groupe Z étant constitué par au moins un groupe alkylène éventuellement relié à un groupe divalent carboxyle ou oxy, le groupe Z comportant de 1 à 19 atomes de carbone et q étant un nombre entier égal à 0 ou 1; et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant de formule (7) : 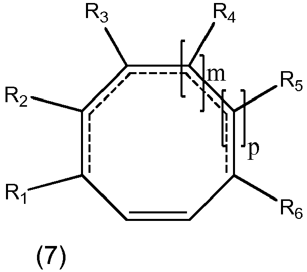 dans laquelle :
- chaque liaison carbone - carbone de la chaîne notée 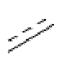 est une double liaison ou une simple liaison, en accord avec les règles de valence de la chimie organique ;
- Les groupes R1 et R6 sont soit tous les deux l'hydrogène soit chacun différent de l'hydrogène et liés entre eux en tant que membres d'un même cycle ou hétérocycle saturé ou insaturé (i.e. comportant au moins une double liaison carbone - carbone, en incluant les aromatiques) ;
- Les groupes R2, R3, R4 et R5, sont chacun, indépendamment ou non des autres groupes, un hydrogène, un groupe halogéno, un groupe alcoxycarbonyle ou un groupe alkyle, les groupes R2 à R5 pouvant être liés entre eux en tant que membres d'un même cycle ou hétérocycle saturé ou insaturé ;
- m et p sont des nombres entiers compris chacun dans une fourchette allant de 0 à 5, la somme m + p étant elle-même comprise dans une fourchette de 0 à 6 ;
ladite étape étant mise en oeuvre pendant une durée strictement supérieure à 3h lorsque le composé de formule (15) est le 4-vinyl-1,3-dioxolan-2-one, et pendant une durée supérieure ou égale à 2h dans tous les autres cas.

2. Procédé de préparation selon la revendication 1, ledit procédé étant tel que le composé de formule (15) est choisi parmi le 4-vinyl-1,3-dioxolan-2-one, le 4-(vinyloxyméthyl)-1,3-dioxolan-2-one, le 4-(acryloyloxyméthyl)-1,3-dioxolan-2-one, les 4-(alcènyloxyméthyl)-1,3-dioxolan-2-one et les 4-(alcènoyloxyméthyl)-1,3-dioxolan-2-one.

3. Procédé de préparation selon l'une quelconque des revendications 1 ou 2, ledit procédé comprenant en outre au moins une étape supplémentaire d'hydrogénation de doubles liaisons carbone-carbone.

4. Polymère hydrocarboné comprenant deux groupements terminaux à terminaisons 2-oxo-1,3-dioxolan-4-yl susceptible d'être obtenu par le procédé selon l'une quelconque des revendications 1 à 3.

5. Polymère hydrocarboné comprenant deux groupements terminaux à terminaisons 2-oxo-1,3-dioxolan-4-yl selon la revendication 4, ledit polymère hydrocarboné étant de formule (1) : 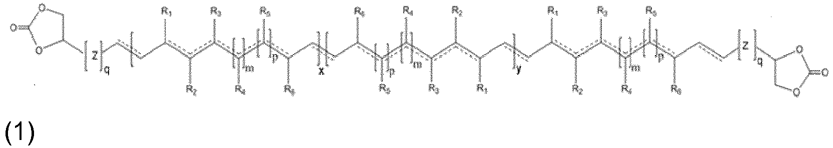 dans laquelle :
- Chaque liaison carbone - carbone de la chaîne notée 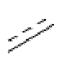 est une double liaison ou une simple liaison, en accord avec les règles de valence de la chimie organique ;
- Les groupes R1 et R6 sont soit tous les deux l'hydrogène soit chacun différent de l'hydrogène et liés entre eux en tant que membres d'un même cycle ou hétérocycle saturé ou insaturé (i.e. comportant au moins une double liaison carbone - carbone, en incluant les aromatiques) ;
- Les groupes R2, R3, R4 et R5, sont chacun, indépendamment ou non des autres groupes, un hydrogène, un groupe halogéno, un groupe alcoxycarbonyle ou un groupe alkyle, les groupes R2 à R5 pouvant être liés entre eux en tant que membres d'un même cycle ou hétérocycle saturé ou insaturé ;
- Le groupe Z est constitué par au moins un groupe alkylène éventuellement relié à un groupe divalent carboxyle ou oxy, le groupe Z comportant de 1 à 19 atomes de carbone;
- q est un nombre égal à 0 ou 1 ;
- m et p sont des nombres entiers compris chacun dans une fourchette allant de 0 à 5, la somme m + p étant elle-même comprise dans une fourchette de 0 à 6 ; et
- x et y sont chacun un nombre entier, indépendamment l'un de l'autre, la somme x + y étant telle que la masse molaire moyenne en nombre Mn du polymère hydrocarboné de formule (1) est comprise dans une fourchette de 600 à 20000 g/mol, et la polymolécularité (PDI) du polymère hydrocarboné de formule (1) est comprise dans une fourchette de 1,1 à 3,0, de préférence de 1,4 à 2,5.

6. Polymère hydrocarboné comprenant deux groupements terminaux à terminaisons 2-oxo-1,3-dioxolan-4-yl selon la revendication 5, ledit polymère hydrocarboné étant de formule (2) ou de formule (3) : 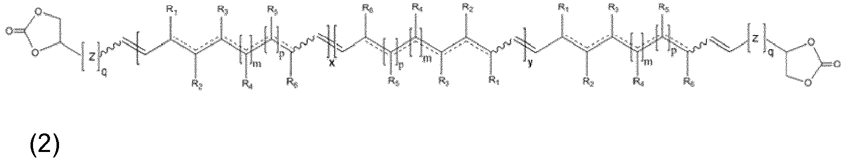 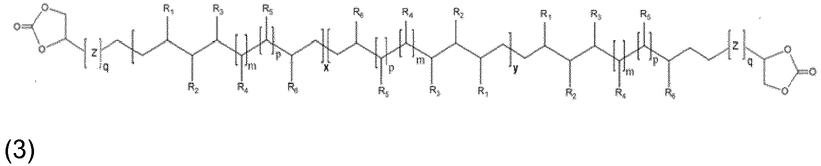 dans lesquelles 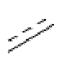 , m, p, q, Z, x, y, R1, R2, R3, R4, R5 et R6 ont les significations données dans la revendication 5, et la liaison 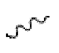 signifie que la liaison est orienté géométriquement d'un côté ou de l'autre par rapport à la double liaison (cis ou trans).

7. Polymère hydrocarboné comprenant deux groupements terminaux (à terminaison 2-oxo-1,3-dioxolan-4-yl selon la revendication 5, ledit polymère hydrocarboné étant de formule (4) : 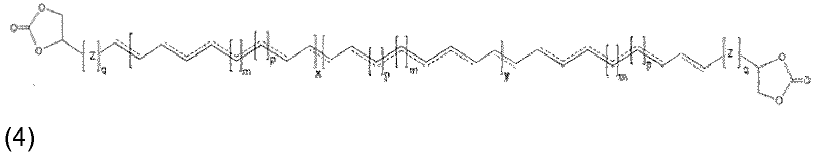 dans laquelle 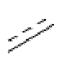 , m, p, q, Z, x et y ont les significations données dans la revendication 5.

8. Polymère hydrocarboné comprenant deux groupements terminaux à terminaisons 2-oxo-1,3-dioxolan-4-yl selon la revendication 7, ledit polymère hydrocarboné étant de formule (5) ou de formule (6) : 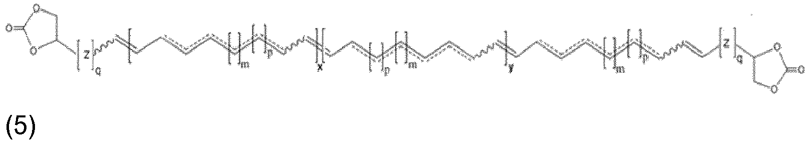 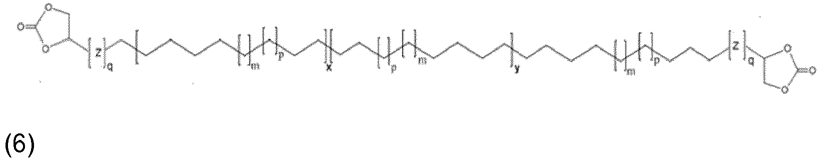 dans lesquelles 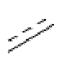 , 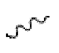 , m, p, q, Z, x et y ont les significations données dans la revendication 5 ou dans la revendication 6.

9. Procédé de préparation de polyuréthanes comprenant la réaction d'au moins un polymère hydrocarboné selon l'une quelconque des revendications 4 à 8, avec au moins un composé comprenant au moins un, de préférence au moins deux, groupements amines, par exemple choisi parmi les amines, les diamines, les triamines et les polyamines.

10. Polyuréthanes susceptibles d'être obtenus par le procédé de préparation selon la revendication 9.

## Patentansprüche

1. Verfahren zur Herstellung mindestens eines Kohlenwasserstoffpolymers mit zwei endständigen Gruppen mit 2-Oxo-1,3-dioxolan-4-yl-Enden, wobei das Verfahren mindestens einen Schritt der Ringöffnungsmetathesepolymerisation in Gegenwart von:
- mindestens einem Metathesekatalysator, vorzugsweise einem rutheniumhaltigen Katalysator, noch weiter bevorzugt einem Grubbs-Katalysator,
- mindestens einer Kettenübertragungsmittel(CTA)-Verbindung der Formel (15): 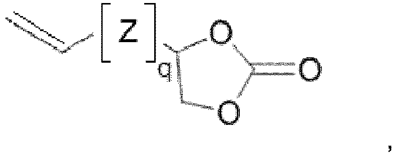 wobei die Gruppe Z aus mindestens einer gegebenenfalls an eine zweiwertige Carboxyl- oder Oxygruppe gebundenen Alkylengruppe besteht, wobei die Gruppe Z 1 bis 19 Kohlenstoffatome enthält und q für eine ganze Zahl mit einem Wert von 0 oder 1 steht; und
- mindestens einer Verbindung, die aus Verbindungen mit mindestens einem Kohlenwasserstoffring und im Allgemeinen 6 bis 16, vorzugsweise 6 bis 12, Kohlenstoffatomen pro Ring, wobei der Ring mindestens eine Kohlenstoff-Kohlenstoff-Doppelbindung aufweist, und substituierten Derivaten dieser Verbindung ausgewählt wird, wobei die Verbindung die Formel (7) aufweist: 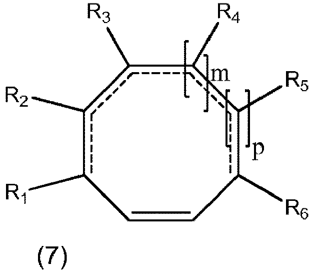
wobei:
- jede Kohlenstoff-Kohlenstoff-Bindung der durch 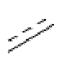 angegebenen Kette eine Doppelbindung oder eine Einfachbindung in Übereinstimmung mit den Valenzregeln der organischen Chemie ist;
- die Gruppen R1 und R6 entweder beide für Wasserstoff stehen oder jeweils von Wasserstoff verschieden sind und als Glieder desselben Rings oder Heterocyclus, der gesättigt oder ungesättigt ist (d.h. mindestens eine Kohlenstoff-Kohlenstoff-Doppelbindung enthält, einschließlich Aromaten), miteinander verbunden sind;
- die Gruppen R2, R3, R4 und R5 jeweils unabhängig von den anderen Gruppen oder nicht für Wasserstoff, eine Halogengruppe, eine Alkoxycarbonylgruppe oder eine Alkylgruppe stehen, wobei die Gruppen R2 bis R5 als Glieder desselben gesättigten oder ungesättigten Rings oder Heterocyclus miteinander verbunden sein können;
- m und p für ganze Zahlen stehen, die jeweils in einem Bereich von 0 bis 5 liegen, wobei die Summe m + p selbst in einem Bereich von 0 bis 6 liegt;
umfasst; wobei der Schritt dann, wenn es sich bei der Verbindung der Formel (15) um 4-Vinyl-1,3-dioxolan-2-on handelt, über einen Zeitraum von strikt mehr als 3 h und in allen anderen Fällen über einen Zeitraum größer gleich 2 h durchgeführt wird.

2. Herstellungsverfahren nach Anspruch 1, wobei das Verfahren so beschaffen ist, dass die Verbindung der Formel (15) aus 4-Vinyl-1,3-dioxolan-2-on, 4-(Vinyloxymethyl)-1,3-dioxolan-2-on, 4-(Acryloyl-oxymethyl)-1,3-dioxolan-2-on, 4-(Alkenyloxy-methyl)-1,3-dioxolan-2-onen und 4-(Alkenoyloxy-methyl)-1,3-dioxolan-2-onen ausgewählt wird.

3. Herstellungsverfahren nach einem der Ansprüche 1 oder 2, wobei das Verfahren außerdem mindestens einen zusätzlichen Schritt der Hydrierung von Kohlenstoff-Kohlenstoff-Doppelbindungen umfasst.

4. Kohlenwasserstoffpolymer mit zwei endständigen Gruppen mit 2-Oxo-1,3-dioxolan-4-yl-Enden, das durch das Verfahren nach einem der Ansprüche 1 bis 3 erhältlich ist.

5. Kohlenwasserstoffpolymer mit zwei endständigen Gruppen mit 2-Oxo-1,3-dioxolan-4-yl-Enden nach Anspruch 4, wobei das Kohlenwasserstoffpolymer die Formel (1) aufweist: 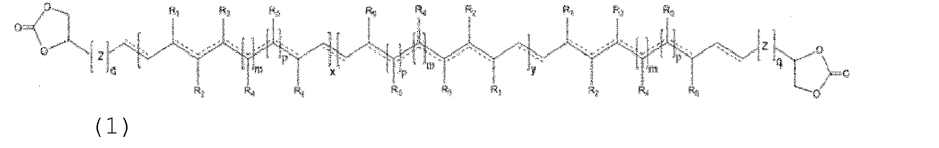 wobei:
- jede Kohlenstoff-Kohlenstoff-Bindung der durch 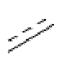 angegebenen Kette eine Doppelbindung oder eine Einfachbindung in Übereinstimmung mit den Valenzregeln der organischen Chemie ist;
- die Gruppen R1 und R6 entweder beide für Wasserstoff stehen oder jeweils von Wasserstoff verschieden sind und als Glieder desselben Rings oder Heterocyclus, der gesättigt oder ungesättigt ist (d.h. mindestens eine Kohlenstoff-Kohlenstoff-Doppelbindung enthält, einschließlich Aromaten), miteinander verbunden sind;
- die Gruppen R2, R3, R4 und R5 jeweils unabhängig von den anderen Gruppen oder nicht für Wasserstoff, eine Halogengruppe, eine Alkoxycarbonylgruppe oder eine Alkylgruppe stehen, wobei die Gruppen R2 bis R5 als Glieder desselben gesättigten oder ungesättigten Rings oder Heterocyclus miteinander verbunden sein können;
- die Gruppe Z aus mindestens einer gegebenenfalls an eine zweiwertige Carboxyl-oder Oxygruppe gebundenen Alkylengruppe besteht, wobei die Gruppe Z 1 bis 19 Kohlenstoffatome enthält;
- q für eine Zahl mit einem Wert von 0 oder 1 steht;
- m und p für ganze Zahlen stehen, die jeweils in einem Bereich von 0 bis 5 liegen, wobei die Summe m + p selbst in einem Bereich von 0 bis 6 liegt; und
- x und y jeweils unabhängig voneinander für eine ganze Zahl stehen, wobei die Summe x + y so beschaffen ist, dass die zahlenmittlere Molmasse Mn des Kohlenwasserstoffpolymers der Formel (1) in einem Bereich von 600 bis 20.000 g/mol liegt und die Polydispersität (PDI) des Kohlenwasserstoffpolymers der Formel (1) in einem Bereich von 1, 1 bis 3,0, vorzugsweise 1,4 bis 2,5, liegt.

6. Kohlenwasserstoffpolymer mit zwei endständigen Gruppen mit 2-Oxo-1,3-dioxolan-4-yl-Enden nach Anspruch 5, wobei das Kohlenwasserstoffpolymer die Formel (2) oder die Formel (3) aufweist: 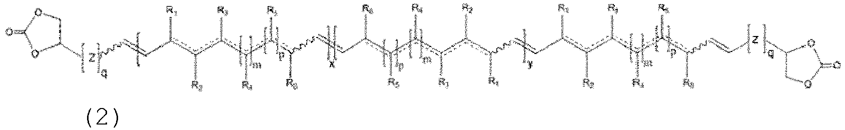 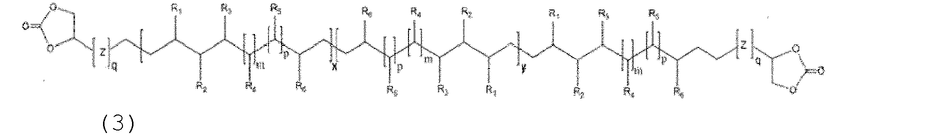 wobei 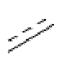 , m, p, q, Z, x, y, R1, R2, R3, R4, R5 und R6 die in Anspruch 5 angegebenen Bedeutungen haben und die Bindung 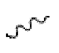 bedeutet, dass die Bindung geometrisch auf der einen Seite oder der anderen Seite in Bezug auf die Doppelbindung orientiert ist (cis oder trans).

7. Kohlenwasserstoffpolymer mit zwei endständigen Gruppen mit 2-Oxo-1,3-dioxolan-4-yl-Enden nach Anspruch 5, wobei das Kohlenwasserstoffpolymer die Formel (4) aufweist: 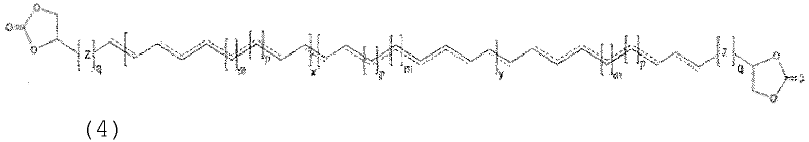 wobei 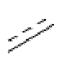 , m, p, q, Z, x und y die in Anspruch 5 angegebenen Bedeutungen haben.

8. Kohlenwasserstoffpolymer mit zwei endständigen Gruppen mit 2-Oxo-1,3-dioxolan-4-yl-Enden nach Anspruch 7, wobei das Kohlenwasserstoffpolymer die Formel (5) oder die Formel (6) aufweist: 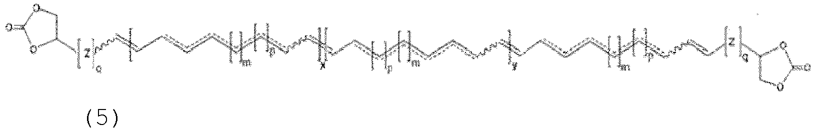 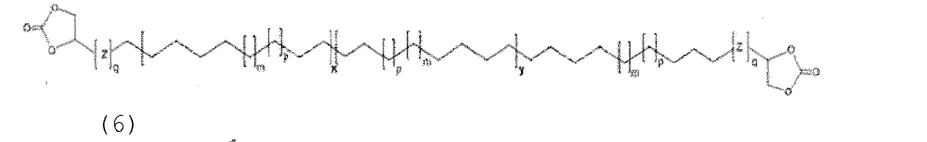 wobei 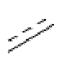 , 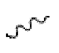 , m, p, q, Z, x und y die in Anspruch 5 oder Anspruch 6 angegebenen Bedeutungen haben.

9. Verfahren zur Herstellung von Polyurethanen, umfassend die Umsetzung von mindestens einem Kohlenwasserstoffpolymer nach einem der Ansprüche 4 bis 8 mit mindestens einer Verbindung mit mindestens einer Amingruppe, vorzugsweise mindestens zwei Amingruppen, die beispielsweise aus Aminen, Diaminen, Triaminen und Polyaminen ausgewählt werden.

10. Polyurethane, die durch das Herstellungsverfahren nach Anspruch 9 erhältlich sind.

## Claims

1. Process for the preparation of at least one hydrocarbon polymer comprising two end groups having 2-oxo-1,3-dioxolan-4-yl final parts, said process comprising at least one stage of ring opening metathesis polymerization in the presence:
- of at least one metathesis catalyst, preferably a ruthenium-comprising catalyst, more preferably still a Grubbs' catalyst;
- of at least one chain transfer agent (CTA) compound of formula (15): 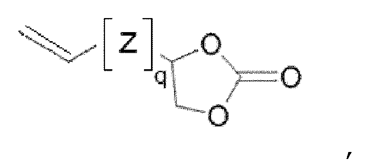
- the Z group being composed of at least one alkylene group optionally connected to a divalent carboxyl or oxy group, the Z group comprising from 1 to 19 carbon atoms and q being an integer equal to 0 or 1; and
- of at least one compound chosen from compounds comprising at least one hydrocarbon ring and generally from 6 to 16, preferably from 6 to 12, carbon atoms per ring, said ring comprising at least one carbon-carbon double bond, and the substituted derivatives of this compound, said compound being of formula (7): 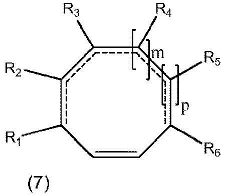 in which:
- each carbon-carbon bond of the chain denoted 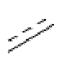 is a double bond or a single bond, in accordance with the valency rules of organic chemistry;
- the R₁ and R₆ groups are either both hydrogen or each different from hydrogen and bonded to one another as members of one and the same ring or heterocycle which is saturated or unsaturated (i.e., comprising at least one carbon-carbon double bond, including aromatics);
- the R₂, R₃, R₄ and R₅ groups are each, independently or not of the other groups, a hydrogen, a halo group, an alkoxycarbonyl group or an alkyl group, it being possible for the R₂ to R₅ groups to be bonded to one another as members of one and the same saturated or unsaturated ring or heterocycle;
- m and p are integers each within a range extending from 0 to 5, the sum m + p being itself within a range from 0 to 6;
said stage being carried out for a period of time strictly of greater than 3 h when the compound of formula (15) is 4-vinyl-1,3-dioxolan-2-one and for a period of time of greater than or equal to 2 h in all the other cases.

2. Preparation process according to Claim 1, said process being such that the compound of formula (15) is chosen from 4-vinyl-1,3-dioxolan-2-one, 4-(vinyl-oxymethyl)-1,3-dioxolan-2-one, 4-(acryloyloxymethyl)-1,3-dioxolan-2-one, 4-(alkenyloxymethyl)-1,3-dioxolan-2-ones and 4-(alkenoyloxymethyl)-1,3-dioxolan-2-ones.

3. Preparation process according to either one of Claims 1 and 2, said process additionally comprising at least one additional stage of hydrogenation of carbon-carbon double bonds.

4. Hydrocarbon polymer comprising two end groups having 2-oxo-1,3-dioxolan-4-yl final parts which is capable of being obtained by the process according to any one of Claims 1 to 3.

5. Hydrocarbon polymer comprising two end groups having 2-oxo-1,3-dioxolan-4-yl final parts according to Claim 4, said hydrocarbon polymer being of formula (1) : 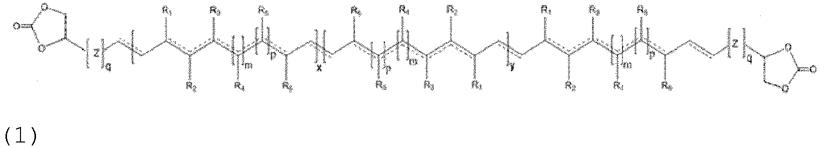 in which:
- each carbon-carbon bond of the chain denoted 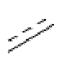 is a double bond or a single bond, in accordance with the valency rules of organic chemistry;
- the R₁ and R₆ groups are either both hydrogen or each different from hydrogen and bonded to one another as members of one and the same ring or heterocycle which is saturated or unsaturated (i.e., comprising at least one carbon-carbon double bond, including aromatics);
- the R₂, R₃, R₄ and R₅ groups are each, independently or not of the other groups, a hydrogen, a halo group, an alkoxycarbonyl group or an alkyl group, it being possible for the R₂ to R₅ groups to be bonded to one another as members of one and the same saturated or unsaturated ring or heterocycle;
- the Z group is composed of at least one alkylene group optionally connected to a divalent carboxyl or oxy group, the Z group comprising from 1 to 19 carbon atoms;
- q is a number equal to 0 or 1;
- m and p are integers each within a range extending from 0 to 5, the sum m + p being itself within a range from 0 to 6; and
- x and y are each an integer, independently of one another, the sum x + y being such that the number-average molar mass Mn of the hydrocarbon polymer of formula (1) is within a range from 600 to 20 000 g/mol, and the polydispersity (PDI) of the hydrocarbon polymer of formula (1) is within a range from 1.1 to 3.0, preferably from 1.4 to 2.5.

6. Hydrocarbon polymer comprising two end groups having 2-oxo-1,3-dioxolan-4-yl final parts according to Claim 5, said hydrocarbon polymer being of formula (2) or of formula (3): 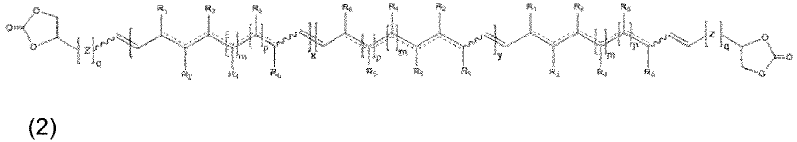 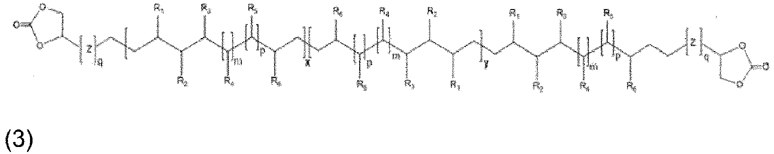 in which 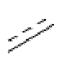 m, p, q, Z, x, y, R₁, R₂, R₃, R₄, R₅ and R₆ have the meanings given in Claim 5 and the 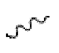 bond means that the bond is oriented geometrically on one side or the other with respect to the double bond (cis or trans).

7. Hydrocarbon polymer comprising two end groups having 2-oxo-1,3-dioxolan-4-yl final parts according to Claim 5, said hydrocarbon polymer being of formula (4) : 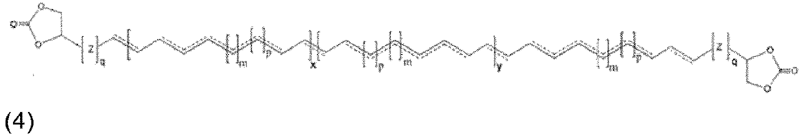 in which 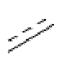 ? m, p, q, Z, x and y have the meanings given in Claim 5.

8. Hydrocarbon polymer comprising two end groups having 2-oxo-1,3-dioxolan-4-yl final parts according to Claim 7, said hydrocarbon polymer being of formula (5) or of formula (6): 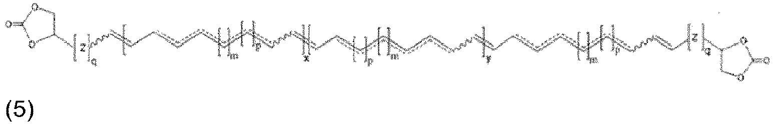 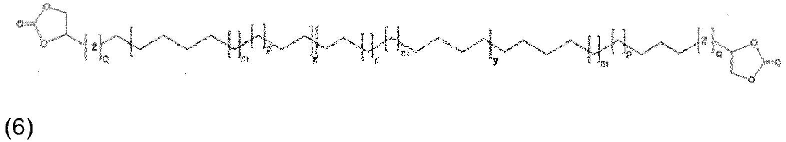 in which 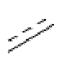 , 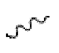 , m, p, q, Z, x and y have the meanings given in Claim 5 or in Claim 6.

9. Process for the preparation of polyurethanes comprising the reaction of at least one hydrocarbon polymer according to any one of Claims 4 to 8 with at least one compound comprising at least one, preferably at least two, amine groups, for example chosen from amines, diamines, triamines and polyamines.

10. Polyurethanes capable of being obtained by the preparation process according to Claim 9.
Process for the preparation of a hydrocarbon polymer comprising two end groups having 2-oxo-1,3-dioxolan-4-yl final parts by ring opening metathesis in the presence of a metathesis catalyst, of a chain transfer agent comprising a carbonate ring and of a compound of formula comprising at least one C₆-C₁₆ ring having a carbon-carbon double bond.
Hydrocarbon polymer capable of being obtained by this process.
Process for the preparation of polyurethanes by reaction of this polymer and of a compound comprising at least one amine group, and polyurethanes thus obtained.
